(19) Europäisches Patentamt
European Patent Office
Office européen des brevets

(11) **EP 2 264 313 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
***F03D 7/02*** *(2006.01)*

(21) Anmeldenummer: **10006200.9**

(22) Anmeldetag: **15.06.2010**

(54) **Verfahren zum Betreiben einer Windenergieanlage und Windenergieanlage**

Method of controlling a wind turbine and wind turbine

Procédé de contrôle d'une éolienne et éolienne

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.06.2009 DE 102009025445**

(43) Veröffentlichungstag der Anmeldung:
**22.12.2010 Patentblatt 2010/51**

(73) Patentinhaber: **Nordex Energy GmbH**
**22419 Hamburg (DE)**

(72) Erfinder:
• **Kabatzke, Wolfgang**
**21502 Geesthacht (DE)**
• **Bilges, Sören**
**22761 Hamburg (DE)**
• **Schwarze, Holger**
**22763 Hamburg (DE)**
• **Nommensen, Nils**
**27419 Sittensen (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 1 596 062       DE-A1- 19 844 258**
**DE-A1-102006 032 007   US-A1- 2004 041 405**

**Beschreibung**

Die Erfindung betrifft ein Verfahren zum Betreiben einer Windenergieanlage, bei dem ein meteorologischer Messwert erfasst und unter Berücksichtigung des Messwerts ein Sollwert für den Anlagenbetrieb vorgegeben, ein Betriebszustand gewählt und/oder eine Randbedingung für den Anlagenbetrieb ermittelt wird, sowie eine Windenergieanlage zur Ausführung des Verfahrens.

Der für den Betrieb einer Windenergieanlage zentrale meteorologische Messwert ist die Windgeschwindigkeit. Bei bekannten Verfahren zum Betreiben einer Windenergieanlage wird die Windgeschwindigkeit beispielsweise von einem Schalenanemometer gemessen. Bekannt ist auch die Wahl eines Betriebszustands in Abhängigkeit von der Windgeschwindigkeit, beispielsweise eine Abschaltung der Windenergieanlage oberhalb einer Abschaltwindgeschwindigkeit, zum Beispiel unter Verstellen des Blatteinstellwinkels in Fahnenstellung.

Ebenfalls bekannt ist die Berücksichtigung weiterer meteorologischer Messwerte beim Betrieb von Windenergieanlagen, beispielsweise des Luftdrucks und der Lufttemperatur. Hierzu schlägt die Druckschrift DE 198 44 258 A1 vor, die Luftdichte zu erfassen und die Abschaltwindgeschwindigkeit in Abhängigkeit der gemessenen Luftdichte festzulegen. Insbesondere soll bei geringerer Luftdichte eine höhere Abschaltwindgeschwindigkeit verwendet werden, als bei höherer Luftdichte. Die Abschaltwindgeschwindigkeit ist eine Randbedingung für den Betrieb der Windenergieanlage, die in Abhängigkeit von der Luftdichte ermittelt wird.

Dieses Vorgehen findet seine Grundlage in dem bekannten Zusammenhang, dass die vom Wind ausgeübten Kräfte, insbesondere Widerstands- und Auftriebskräfte, von der Luftdichte abhängig sind. Für die auftretenden Kräfte gilt vereinfacht:

$$F = \frac{1}{2}\rho_{Luft}Av^2c_w \qquad \text{(Gleichung 1)}.$$

$\rho_{Luft}$ bezeichnet die Luftdichte, A die für die zu berechnende Kraft maßgebliche Fläche, v die Windgeschwindigkeit und $c_w$ den sogenannten Kraftbeiwert.

Ebenfalls bekannt ist der Zusammenhang

$$P = \frac{1}{2}\rho_{Luft}Av^3c_p \qquad \text{(Gleichung 2)}$$

für die Leistung einer Windenergieanlage, worin $c_p$ den Leistungsbeiwert bezeichnet. Die beiden Gleichungen zeigen allgemein die Bedeutung der Luftdichte, die als linearer Faktor sowohl in die auftretenden Kräfte als auch in die Leistung der Windenergieanlage einfließt.

Davon ausgehend ist es die Aufgabe der Erfindung, die Betriebsführung einer Windenergieanlage zu optimieren.

Diese Aufgabe wird gelöst durch das Verfahren zum Betreiben einer Windenergieanlage mit den Merkmalen des Anspruchs 1. Vorteilhafte Ausgestaltungen sind in den sich anschließenden Unteransprüchen angegeben.

Bei dem erfindungsgemäßen Verfahren wird ein meteorologischer Messwert erfasst und unter Berücksichtigung des Messwerts wird ein Sollwert für den Anlagenbetrieb vorgegeben, ein Betriebszustand gewählt und/oder eine Randbedingung für den Anlagenbetrieb ermittelt, wobei der Messwert ein vom Wind verursachter Luftmassenstrom ist.

Die Erfindung beruht auf der Erkenntnis, dass die Berücksichtigung eines vom Wind verursachten Luftmassenstroms die Steuerung der Windenergieanlage in mehrfacher Hinsicht verbessern und vereinfachen kann. Insbesondere kann durch Berücksichtigung des Luftmassenstroms die Luftdichte implizit berücksichtigt werden, ohne dass sie als gesonderter Messwert erfasst werden müsste. Die grundlegende Bedeutung des Luftmassenstroms für den Betrieb einer Windenergieanlage wird auch aus folgender Betrachtung erkennbar. Der Luftmassenstrom wird durch die Gleichung

$$\dot{m} = A_{LM}v\rho_{Luft} \qquad \text{(Gleichung 3)}$$

beschrieben, wobei $A_{LM}$ die Fläche bezeichnet, die von dem betrachteten Luftmassenstrom durchströmt wird, und m den Luftmassenstrom selbst. Wie der Punkt andeutet, kann der Luftmassenstrom als zeitliche Ableitung der durch die Fläche $A_{LM}$ hindurchgetretenen Luftmenge verstanden werden. Die Kombination des Ausdrucks für den Luftmassenstrom mit den beiden oben genannten grundlegenden Gleichungen 1 und 2 führt zu den folgenden Ausdrücken für die auftretenden Kräfte und die Leistung:

$$F = \frac{1}{2}\frac{A}{A_{LM}}c_wv\dot{m} \qquad \text{(Gleichung 4)}.$$

$$P = \frac{1}{2}\frac{A}{A_{LM}}c_pv^2\dot{m} \qquad \text{(Gleichung 5)}$$

In den beiden letztgenannten Gleichungen kommt die Luftdichte $\rho_{Luft}$ nicht mehr vor. Es gelingt also, durch Erfassung des Luftmassenstromes $\dot{m}$ die für den Anlagenbetrieb maßgeblichen Größen, die sich auf die auftretenden Kräfte oder die von der Luftströmung bereitgestellte bzw. von der Windenergieanlage nutzbare Leistung zurückführen lassen, zu bestimmen.

Die Messung eines Luftmassenstroms ist dabei industriell weit verbreitet, insbesondere wird sie bei der Steuerung von Verbrennungskraftmaschinen, beispielsweise in Automobilen, eingesetzt. Dadurch kann das Verfahren unter Umständen mit geringerem Aufwand ausgeführt werden, als eine gesonderte Messung der Luftdichte.

Ein weiterer Vorteil ist, dass bei Messung des Luftmassenstroms die tatsächliche Luftdichte erfasst werden kann. Die Messung der Luftdichte ist hingegen nicht ohne weiteres möglich und wird häufig durch Messung des Luftdrucks angenähert. Gegebenenfalls kann bei der Ermittlung der Luftdichte auch eine gemessene Lufttemperatur berücksichtigt werden, was eine genauere Bestimmung der Luftdichte ermöglicht. Weiteren Einfluss auf die Luftdichte hat jedoch auch die Luftfeuchtigkeit, die zur Bestimmung der Luftdichte nötigenfalls gesondert gemessen werden muss.

Die erfindungsgemäße Berücksichtigung des Luftmassenstroms erfolgt innerhalb der Betriebsführung der Windenergieanlage, die die Komponenten der Windenergieanlage steuert und regelt. Die Betriebsführung kann beispielsweise ein Generatormoment vorgeben, einen Pitchwinkelregler ansteuern, usw. Dass der Luftmassenstrom berücksichtigt wird, kann insbesondere bedeuten, dass er in eine mathematische Berechnung einer Betriebsgröße einfließt, oder dass bei Erreichen, Unter- oder Überschreiten definierter Grenzwerte des Luftmassenstroms eine Betriebsgröße angepasst wird.

Der Messwert für den vom Wind verursachten Luftmassenstrom wird der Betriebsführung zur Verfügung gestellt. Die eigentliche Messgröße kann z.B. die Leistungsaufnahme eines auf konstante Temperatur geregelten Heizelements, etwa eines Hitzdrahts, sein, der im Luftstrom angeordnet ist. Diese Messgröße ist ein unmittelbares Maß für den Luftmassenstrom. Dieses Messprinzip ist von industriell eingesetzten Hitzdraht- oder Heissfilmluftmassensensoren bekannt.

Umfasst ist auch eine Erfassung des Messwerts für den Luftmassenstrom innerhalb eines geeigneten Luftmassensensors durch Kombination mehrerer Messgrößen, insbesondere für einen Luftvolumenstrom oder eine Strömungsgeschwindigkeit, eine Lufttemperatur, einen Luftdruck und eventuell eine Luftfeuchtigkeit, beispielsweise anhand von in dem Luftmassensensor hinterlegten Kennlinien oder durch Berechnung innerhalb des Luftmassensensors. Dies kann beispielsweise mit einem sogenannten Karman-Vortex-Luftmassensensor geschehen, in dem die Strömungsgeschwindigkeit mittels Ultraschall-Doppler-Anemometrie bestimmt wird.

In allen Fällen wird der Betriebsführung der Windenergieanlage letztlich ein einziger Messwert zur Verfügung gestellt, der den Luftmassenstrom repräsentiert. Der Messwert kann zum Beispiel in der Einheit kg/h vorliegen oder durch Anwendung eines konstanten Zahlenfaktors in diese umgerechnet werden. Der Messwert ist weiterhin stets bezogen auf eine definierte Fläche. Dies kann die Fläche sein, durch die der vom Wind verursachte Luftstrom bei der Messung hindurchströmt, oder eine sonstige definierte Bezugsgröße, beispielsweise eine Fläche von 1 cm$^2$. Der Luftstrom und die für die Erfassung des Messwerts herangezogene Querschnittsfläche können zu Messzwecken beispielsweise durch ein Rohr begrenzt sein.

Es versteht sich, dass bei dem erfindungsgemäßen Verfahren zusätzlich zu dem Luftmassenstrom weitere meteorologische Messgrößen, insbesondere die Windgeschwindigkeit, erfasst werden können, und dass auch mehrere Sollwerte für den Anlagenbetrieb gleichzeitig vorgegeben werden können, etwa ein Sollwert für den Pitchwinkel und ein Sollwert für die Rotordrehzahl.

Das Wählen eines Betriebszustands kann beispielsweise darin bestehen, die Windenergieanlage abzuschalten oder in den Trudelbetrieb zu versetzen. Diese Wahl der Betriebsart kann unter Berücksichtigung des Luftmassenstroms erfolgen, beispielsweise kann ab einem bestimmten Luftmassenstrom eine bestimmte Betriebsart gewählt werden.

In einer bevorzugten Ausgestaltung ist der Sollwert ein Generatormoment. Das Generatormoment wirkt, gegebenenfalls über ein Getriebe, dem vom Rotor aus dem Wind aufgenommenen Drehmoment entgegen. Ein optimaler Sollwert für das Generatormoment kann daher wegen des in Gleichung 4 angegebenen Zusammenhangs sinnvollerweise unter Berücksichtigung des Luftmassenstroms $\dot{m}$ vorgegeben werden. Beispielsweise kann der Sollwert für das Generatormoment ab einem Grenzluftmassenstrom abgesenkt werden.

Gemäß einer Ausgestaltung ist der Sollwert eine elektrische Leistung. Die elektrische Leistung, die von der Windenergieanlage zur Verfügung gestellt werden kann, ist gemäß der oben entwickelten Gleichung 5 mit dem Luftmassenstrom korreliert. Ein optimaler Sollwert für die elektrische Leistung kann daher insbesondere unter Berücksichtigung des Luftmassenstroms vorgegeben werden. Beispielsweise kann der Sollwert für die elektrische Leistung ab einem Grenzluftmassenstrom abgesenkt werden.

Gemäß einer Ausgestaltung betrifft die Randbedingung einen maximal zulässigen Wert einer auf den Wind zurückzuführenden Belastung. Auf den Wind zurückzuführende Belastungen von Komponenten der Windenergieanlage, beispielsweise der Rotorblätter, sind wegen Gleichung 4 mit dem Luftmassenstrom verknüpft. Sinnvollerweise wird die Randbedingung, beispielsweise eine maximal zulässige Rotordrehzahl, daher unter Berücksichtigung des Luftmassenstroms ermittelt.

In einer Ausgestaltung ist die Randbedingung eine Abschaltwindgeschwindigkeit. Bei der Abschaltwindgeschwindigkeit kann die Windenergieanlage abgeschaltet oder in einen anderen Betriebszustand versetzt werden. Eine unter Berücksichtigung des Luftmassenstroms ermittelte Abschaltwindgeschwindigkeit kann die tatsächlich auftretenden Belastungen, die die Abschaltung der Windenergieanlage erforderlich machen, genauer widerspiegeln als eine fest vorgegebene Abschaltwindgeschwindigkeit. Unter Berücksichtigung des Luftmassenstroms ist auch eine die tatsächlichen Belastungen noch genauer widerspiegelnde Wahl der Abschaltwindgeschwindigkeit möglich, als bei einer zusätzlichen Berücksichtigung der Luftdichte, wie aus DE 198 44 258 A1 bekannt. Grund hierfür ist, dass die bei dem bekannten Verfahren berücksichtigte Luftdichte die tatsächliche Luftdichte häufig nur annähert, während bei der erfindungsgemäßen Messung des Luftmassenstroms aufgrund des Messprinzips stets eine Berücksichtigung der tatsächlich vorliegenden Luftdichte erfolgen kann.

In einer Ausgestaltung ist die Randbedingung eine Einschaltwindgeschwindigkeit. Die Einschaltwindgeschwindigkeit ist diejenige Windgeschwindigkeit, bei der die Windenergieanlage auf das Netz aufgeschaltet und in den Produktionsbetrieb versetzt wird. Bei der Festlegung der Einschaltwindgeschwindigkeit ist es das Ziel, den Produktionsbetrieb der Windenergieanlage aufzunehmen, sobald dies wirtschaftlich möglich ist. Unter Berücksichtigung des Luftmassenstroms kann zuverlässiger beurteilt werden, ob ein Produktionsbetrieb wirtschaftlich möglich ist. Beispielsweise kann der Produktionsbetrieb bereits bei geringerer Windgeschwindigkeit aufgenommen werden, wenn wegen einer hohen Luftdichte mit dieser geringen Windgeschwindigkeit bereits ein relativ hoher Luftmassenstroms einhergeht. Dadurch wird insgesamt eine bessere Ausnutzung des Windangebots möglich.

Gemäß einer Ausgestaltung erfolgt die Vorgabe des Sollwerts oder die Ermittlung der Randbedingung anhand einer Kennlinie, die jedem Wert des Produkts aus Windgeschwindigkeit und Luftmassenstrom einen Sollwert bzw. einen Wert für die Randbedingung zuordnet. Grundsätzlich kann der Luftmassenstrom von der Betriebsführung der Windenergieanlage in beliebiger Weise berücksichtigt werden, beispielsweise durch Berechnung eines Sollwerts auf Grundlage einer mathematischen Formel. Stattdessen wird in der Praxis jedoch häufig auf Kennlinien zurückgegriffen, um aufwendige Berechnungen zu vermeiden und einfach Anpassungen vornehmen zu können, die sich nicht ohne weiteres in die mathematischen Formeln integrieren lassen. Die Kennlinie kann in einem definierten Speicherbereich eines Computers, der von der Betriebsführung ausgewertet wird, gespeichert sein. Die Vorgabe des Sollwerts oder die Ermittlung der Randbedingung anhand der Kennlinie kann dann erfolgen, indem die Betriebsführung im Rahmen eines Computerprogramms das Produkt aus einer gemessenen Windgeschwindigkeit und dem gemessenen Luftmassenstrom bildet und durch Auswertung der gespeicherten Kennlinie den diesem Produkt zugeordneten Sollwert bzw. den Wert für die Randbedingung ermittelt und für den weiteren Anlagenbetrieb verwendet. Die Hinterlegung einer Kennlinie, die vom Produkt aus Windgeschwindigkeit und Luftmassenstrom ausgeht, ist besonders zweckmäßig, weil, wie sich Gleichung 4 entnehmen lässt, ein linearer Zusammenhang zwischen diesem Produkt und den auftretenden Kräften besteht.

In einer Ausgestaltung erfolgt die Vorgabe des Sollwerts oder die Ermittlung der Randbedingung anhand einer Kennlinie, die jedem Wert des Produkts aus Rotor- oder Generatordrehzahl und Luftmassenstrom einen Sollwert bzw. einen Wert für die Randbedingung zuordnet. Die so definierte Kennlinie ist insbesondere zweckmäßig zur Vorgabe eines Sollwerts für das Generatormoment im Teillastbetrieb. Bekannt ist eine Vorgabe des Generatormoments nach folgender Formel:

$$M_{gen} = \frac{c_p \rho_{Luft} \pi R^5}{2\lambda^3} \Omega^2 \qquad \text{(Gleichung 6),}$$

wobei R den Rotorradius, $\Omega$ die Rotordrehzahl und $\lambda$ die Schnelllaufzahl bezeichnet. Die Luftdichte $\rho_{Luft}$ lässt sich wiederum durch Kombination der Gleichung 6 mit der Gleichung 3 eliminieren, was zu folgendem Ausdruck für das Generatormoment führt:

$$M_{gen} = \frac{c_p \pi R^4}{2\lambda^2 A_{LM}} \Omega \dot{m} \qquad \text{(Gleichung 7).}$$

Diese Formel zeigt die Proportionalität des vorzugebenden Generatormoments zum Produkt aus Rotordrehzahl und Luftmassenstrom.

Die obige Aufgabe wird ebenfalls gelöst durch die Windenergieanlage mit den Merkmalen des Anspruchs 9. Vorteilhafte Ausgestaltungen sind in den sich anschließenden Unteransprüchen angegeben.

Die erfindungsgemäße Windenergieanlage hat einen Rotor, der mindestens ein Rotorblatt aufweist, einen Generator, eine Einrichtung zur Erfassung eines meteorologischen Messwerts und eine Betriebsführung, wobei die Betriebsführung so ausgebildet ist, dass sie unter Berücksichtigung des Messwerts einen Sollwert für den Anlagenbetrieb vorgibt, einen Betriebszustand auswählt und/oder eine Randbedingung für den Anlagenbetrieb ermittelt, wobei die Einrichtung zur Erfassung des Messwerts ein Luftmassensensor zur Erfassung eines vom Wind verursachten Luftmassenstroms ist.

Zur Erläuterung der Komponenten und Vorteile der Windenergieanlage wird auf die vorstehenden Erläuterungen des erfindungsgemäßen Verfahrens verwiesen. Die Windenergieanlage ist zur Ausführung des Verfahrens geeignet.

Die Erfindung wird nachfolgend anhand von drei Figuren, die sich auf Ausführungsbeispiele der Erfindung beziehen, näher erläutert. Es zeigen:

Fig. 1 eine erfindungsgemäße Windenergieanlage;

Fig. 2 ein Diagramm zur Belastung einer Komponente einer Windenergieanlage in Abhängigkeit von der Windgeschwindigkeit bei unterschiedlichen Luftdichten;

Fig. 3 ein weiteres Diagramm zur Belastung einer Komponente einer Windenergieanlage in Abhängigkeit vom Produkt aus Windgeschwindigkeit und Luftmassenstrom.

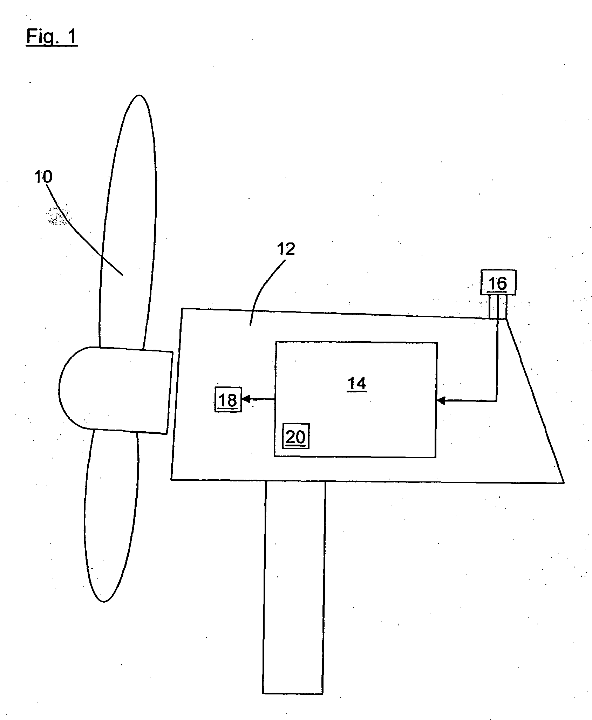

Fig. 1 zeigt eine Windenergieanlage mit einem Rotor 10, der mindestens ein Rotorblatt aufweist, und einer Gondel 12, in der ein nicht dargestellter Generator angeordnet ist, der von dem Rotor 10 angetrieben wird. Die Windenergieanlage weist eine Betriebsführung 14 auf, welche die Windenergieanlage steuert. Die Betriebsführung 14 ist mit einem Luftmassensensor 16 verbunden, der der Betriebsführung 14 einen Messwert für den durch eine definierte Fläche tretenden Luftmassenstrom, der vom Wind verursacht wird, zur Verfügung stellt. Die Betriebsführung 14 gibt unter Berücksichtigung des Messwerts für den Luftmassenstrom einen Sollwert 18 für den Betrieb der Anlage vor, beispielsweise ein Generatormoment. Weiterhin ermittelt die Betriebsführung 14 unter Berücksichtigung des Messwerts für den Luftmassenstrom eine Randbedingung 20. Dabei handelt es sich beispielsweise um eine Abschaltwindgeschwindigkeit.

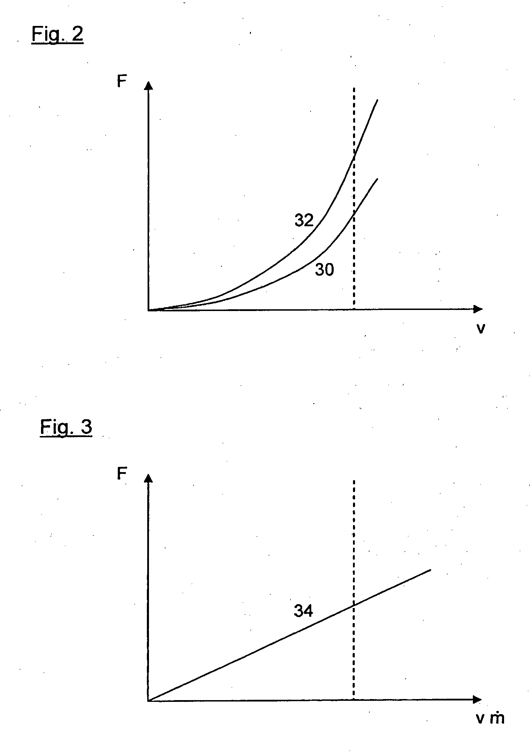

Fig. 2 zeigt eine Belastung einer Komponente der Windenergieanlage, beispielsweise eines Rotorblatts, in Abhängigkeit von der Windgeschwindigkeit. Die Kurve 30 zeigt die Belastung bei einer ersten Luftdichte $\rho_1$, die Kurve 32 bei einer zweiten Luftdichte $\rho_2$. Die Luftdichte $\rho_2$ ist größer als die Luftdichte $\rho_1$, so dass auch die von der Kurve 32 einer bestimmten Windgeschwindigkeit $v$ zugeordnete Belastung höher ist als diejenige der Kurve 30. Da die Belastung grundsätzlich quadratisch mit der Windgeschwindigkeit zunimmt, zeigen die Kurven 30 und 32 den typischen Verlauf einer quadratischen Funktion.

In der Fig. 3 ist die Belastung nicht über die Windgeschwindigkeit $v$, sondern über das Produkt aus der Windgeschwindigkeit $v$ und dem Luftmassenstrom $\dot{m}$ aufgetragen. In dieser Darstellung ergibt sich eine einzige Kurve 34, die für unterschiedliche Luftdichten gleichermaßen gilt. Da zudem ein linearer Zusammenhang zwischen der Belastung und dem Produkt aus Windgeschwindigkeit $v$ und Luftmassenstrom $\dot{m}$ gilt, ist die Kurve 34 eine Gerade.

**Patentansprüche**

1. Verfahren zum Betreiben einer Windenergieanlage, bei dem ein meteorologischer Messwert erfasst und unter Berücksichtigung des Messwerts ein Sollwert (18) für den Anlagenbetrieb vorgegeben, ein Betriebszustand gewählt und/oder eine Randbedingung (20) für den Anlagenbetrieb ermittelt wird, **dadurch gekennzeichnet, dass** der Messwert ein vom Wind verursachter Luftmassenstrom ($\dot{m}$) ist.

2. Verfahren nach Anspruch 1, **dadurch gekenn-**

zeichnet, dass der Sollwert (18) ein Generatormoment oder eine elektrische Leistung ist.

3. Verfahren nach Anspruch 1 oder 2, **dadurch gekennzeichnet, dass** die Randbedingung (20) einen maximal zulässigen Wert einer auf den Wind zurückzuführenden Belastung betrifft.

4. Verfahren nach Anspruch 3, **dadurch gekennzeichnet, dass** die Randbedingung (20) eine Abschaltwindgeschwindigkeit ist.

5. Verfahren nach einem der Ansprüche 1 bis 4, **dadurch gekennzeichnet, dass** die Randbedingung (20) eine Einschaltwindgeschwindigkeit ist.

6. Verfahren nach einem der Ansprüche 1 bis 5, **dadurch gekennzeichnet, dass** die Vorgabe des Sollwerts (18) oder die Ermittlung der Randbedingung (20) anhand einer Kennlinie (34) erfolgt, die jedem Wert des Produkts aus Windgeschwindigkeit ($v$) und Luftmassenstrom ($\dot{m}$) einen Sollwert (18) bzw. einen Wert für die Randbedingung (20) zuordnet.

7. Verfahren nach einem der Ansprüche 1 bis 5, **dadurch gekennzeichnet, dass** die Vorgabe des Sollwerts (18) oder die Ermittlung der Randbedingung (20) anhand einer Kennlinie erfolgt, die jedem Wert des Produkts aus Rotor- oder Generatordrehzahl und Luftmassenstrom (m) einen Sollwert (18) bzw. einen Wert für die Randbedingung (20) zuordnet.

8. Verfahren nach einem der Ansprüche 1 bis 5, **dadurch gekennzeichnet, dass** die Vorgabe des Sollwerts (18) oder die Ermittlung der Randbedingung (20) anhand einer Kennlinie erfolgt, die jedem Wert des Produkts aus dem Quadrat der Windgeschwindigkeit ($v$) und dem Luftmassenstrom ($\dot{m}$) einen Sollwert (18) bzw. einen Wert für die Randbedingung (20) zuordnet.

9. Windenergieanlage mit einem Rotor (10), der mindestens ein Rotorblatt aufweist, einem Generator, einer Einrichtung zur Erfassung eines meteorologischen Messwerts und einer Betriebsführung (14), wobei die Betriebsführung (14) so ausgebildet ist, dass Sie unter Berücksichtigung des Messwerts einen Sollwert (18) für den Anlagenbetrieb vorgibt, einen Betriebszustand auswählt und/oder eine Randbedingung (20) für den Anlagenbetrieb ermittelt, **dadurch gekennzeichnet, dass** die Einrichtung zur Erfassung des Messwerts ein Luftmassensensor (16) zur Erfassung eines vom Wind verursachten Luftmassenstroms ist.

10. Windenergieanlage nach Anspruch 9, **dadurch gekennzeichnet, dass** die Betriebsführung (14) so ausgebildet ist, dass sie unter Berücksichtigung des Messwerts einen Sollwert (18) für ein Generatormoment oder für eine elektrische Leistung vorgibt.

**11.** Windenergieanlage nach Anspruch 9 oder 10, **dadurch gekennzeichnet, dass** die Betriebsführung (14) so ausgebildet ist, dass sie unter Berücksichtigung des Messwerts eine Randbedingung (20) ermittelt, die einen maximal zulässigen Wert einer auf den Wind zurückzuführenden Belastung betrifft.

**12.** Windenergieanlage nach einem der Ansprüche 9 bis 11, **dadurch gekennzeichnet, dass** die Betriebsführung (14) so ausgebildet ist, dass sie unter Berücksichtigung des Messwerts eine Abschaltwindgeschwindigkeit oder eine Einschaltwindgeschwindigkeit ermittelt.

**13.** Windenergieanlage nach einem der Ansprüche 9 bis 12, **dadurch , gekennzeichnet, dass** die Betriebsführung (14) eine Einrichtung aufweist, in der eine Kennlinie hinterlegt ist, die jedem Wert des Produkts aus Windgeschwindigkeit (v) und Luftmassenstrom ($\dot{m}$) einen Sollwert (18) bzw. einen Wert für die Randbedingung (20) zuordnet.

**14.** Windenergieanlage nach einem der Ansprüche 9 bis 12, **dadurch gekennzeichnet, dass** die Betriebsführung (14) eine Einrichtung aufweist, in der eine Kennlinie hinterlegt ist, die jedem Wert des Produkts aus Rotor- oder Generatordrehzahl und Luftmassenstrom ($m\dot{m}$) einen Sollwert bzw. einen Wert für die Randbedingung zuordnet.

**15.** Windenergieanlage nach einem der Ansprüche 9 bis 12, **dadurch gekennzeichnet, dass** die Betriebsführung (14) eine Einrichtung aufweist, in der eine Kennlinie hinterlegt ist, die jedem Wert des Produkts aus dem Quadrat der Windgeschwindigkeit (v) und dem Luftmassenstrom ($\dot{m}$) einen Sollwert (18) bzw. einen Wert für die Randbedingung (20) zuordnet.

**Claims**

**1.** Method for operating a wind turbine, wherein a meteorological value is measured and by using the measured value a desired value (18) for the turbine operation is preset, an operation condition is selected and/or a boundary condition (20) for the turbine operation is determined, **characterised in that** the measured value is an air mass flow (m) caused by the wind.

**2.** Method according to claim 1, **characterised in that** the desired value (18) is a generator torque or an electric power.

**3.** Method according to claim 1 or 2, **characterised in that** the boundary condition (20) concerns a maximum admissible value of a load that is caused by the wind.

**4.** Method according to claim 3, **characterised in that** the boundary condition (20) is a cut-out wind speed.

**5.** Method according to one of claims 1 to 4, **characterised in that** the boundary condition (20) is a cut-in wind speed.

**6.** Method according to one of claims 1 to 5, **characterised in that** the desired value (18) is preset, or the boundary condition (20) is determined, by way of a characteristic curve (34), which associates a desired value (18) or a value for the boundary condition (20), respectively, to each value of the product of the wind speed (v) and the air mass flow ($\dot{m}$).

**7.** Method according to one of claims 1 to 5, **characterised in that** the desired value (18) is preset, or the boundary condition (20) is determined, by way of a characteristic curve, which associates a desired value (18) or a value for the boundary condition (20), respectively, to each value of the product of the rotor or generator rotational speed and the air mass flow ($\dot{m}$).

**8.** Method according to one of claims 1 to 5, **characterised in that** the desired value (18) is preset, or the boundary condition (20) is determined, by way of a characteristic curve, which associates a desired value (18) or a value for the boundary condition (20), respectively, to each value of the product of the square of the wind speed (v) and the air mass flow ($\dot{m}$).

**9.** Wind turbine comprising a rotor (10) having at least one rotor blade, a generator, a device for measuring a meteorological value and a control system (14), wherein the control system (14) is configured such, that it uses the measured value to preset a desired value (18) for the turbine operation, to select an operation condition and/or to determine a boundary condition (20) for the turbine operation, **characterised in that** the device for measuring the value is an air mass sensor (16) adapted to measure an air mass flow caused by the wind.

**10.** Wind turbine according to claim 9, **characterised in that** the control system (14) is configured such that it uses the measured value to preset a desired value (18) for a generator torque or an electric power.

**11.** Wind turbine according to claim 9 or 10, **characterised in that** the control system (14) is configured such that it uses the measured value to determine a boundary condition (20) which concerns a maximum admissible value of a load that is caused by the wind.

12. Wind turbine according to one of claims 9 to 11, **characterised in that** the control system (14) is configured such that it uses the measured value to determine a cut-out wind speed or a cut-in wind speed.

13. Wind turbine according to one of claims 9 to 12, **characterised in that** the control system (14) features a device in which a characteristic curve is stored, which associates a desired value (18) or a value for the boundary condition (20), respectively, to each value of the product of the wind speed (v) and the air mass flow ($\dot{m}$).

14. Wind turbine according to one of claims 9 to 12, **characterised in that** the control system (14) features a device in which a characteristic curve is stored, which associates a desired value (18) or a value for the boundary condition (20), respectively, to each value of the product of the rotor or generator rotational speed and the air mass flow ($\dot{m}$).

15. Wind turbine according to one of claims 9 to 12, **characterised in that** the control system (14) features a device in which a characteristic curve is stored, which associates a desired value (18) or a value for the boundary condition (20), respectively, to each value of the product of the square of the wind speed (v) and the air mass flow ($\dot{m}$).

## Revendications

1. Procédé d'opération d'une éolienne, dans lequel une valeur de mesure météorologique est détectée et une consigne (18) est prescrite en tenant compte de la valeur de mesure, un état de fonctionnement est choisi et/ou une contrainte (20) pour le fonctionnement de l'installation est déterminée, **caractérisé en ce que** la valeur de mesure est un courant massique d'air ($\dot{m}$) causé par le vent.

2. Procédé selon la revendication 1, **caractérisé en ce que** la consigne (18) est un couple du générateur ou une puissance électrique.

3. Procédé selon la revendication 1 ou 2, **caractérisé en ce que** la contrainte (20) se réfère à une valeur maximale admise d'une charge attribuable au vent.

4. Procédé selon la revendication 3, **caractérisé en ce que** la contrainte (20) est une vitesse du vent à laquelle l'éolienne s'arrête.

5. Procédé selon l'une quelconque des revendications 1 à 4, **caractérisé en ce que** la contrainte (20) est une vitesse du vent à laquelle l'éolienne est démarrée.

6. Procédé selon l'une quelconque des revendications 1 à 5, **caractérisé en ce que** l'indication de la consigne (18) ou la détermination de la contrainte (20) se font à l'aide d'une courbe caractéristique (34) qui associe une consigne (18) ou respectivement une valeur de la contrainte (20) à chaque valeur du produit de la vitesse du vent (v) et du courant massique d'air ($\dot{m}$).

7. Procédé selon l'une quelconque des revendications 1 à 5, **caractérisé en ce que** l'indication de la consigne (18) ou la détermination de la contrainte (20) se font à l'aide d'une courbe caractéristique qui associe une consigne (18) ou respectivement une valeur de la contrainte (20) à chaque valeur du produit de la vitesse de rotation du rotor ou générateur et du courant massique d'air ($\dot{m}$).

8. Procédé selon l'une quelconque des revendications 1 à 5, **caractérisé en ce que** l' indication de la consigne (18) ou la détermination de la contrainte (20) se font à l'aide d'une courbe caractéristique qui associe une consigne (18) ou respectivement une valeur de la contrainte (20) à chaque valeur du produit du carré de la vitesse du vent (v) et du courant massique d'air ($\dot{m}$).

9. Éolienne avec un rotor (10), qui comporte au moins une pale de rotor, un générateur, un dispositif pour la détection d'une valeur de mesure météorologique et une commande de fonctionnement (14), la commande de fonctionnement (14) étant faite de sorte qu'elle prescrit une consigne (18) pour le fonctionnement de l'installation en tenant compte de la valeur de mesure, choisit un état de fonctionnement et/ou détermine une contrainte (20) pour le fonctionnement de l'installation, **caractérisé en ce que** le dispositif pour la détection d'une valeur de mesure est un capteur (16) pour détecter un courant massique d'air causé par le vent.

10. Éolienne selon la revendication 9, **caractérisée en ce que** la commande de fonctionnement (14) est tellement faite qu'elle prescrit une consigne (18) pour un couple du générateur ou pour une puissance électrique en tenant compte de la valeur de mesure.

11. Éolienne selon la revendication 9 ou 10, **caractérisée en ce que** la commande de fonctionnement (14) est tellement faite qu'elle détermine, en tenant compte de la valeur de mesure, une contrainte (20) qui se réfère à une valeur maximale admise d'une charge attribuée au vent.

12. Éolienne selon l'une quelconque des revendications 9 à 11, **caractérisée en ce que** la commande de fonctionnement (14) est tellement faite qu'elle détermine une vitesse du vent à laquelle l'éolienne s'arrête ou est démarrée en tenant compte de la valeur de mesure.

13. Éolienne selon l'une quelconque des revendications 9 à 12, **caractérisée en ce que** la commande de fonctionnement (14) comporte un dispositif dans lequel une courbe caractéristique est enregistrée qui associe une consigne (18) ou respectivement une valeur de la contrainte (20) à chaque valeur du produit de la vitesse du vent (v) et du courant massique d'air ($\dot{m}$).

14. Éolienne selon l'une quelconque des revendications 9 à 12, **caractérisée en ce que** la commande de fonctionnement (14) comporte un dispositif dans lequel une courbe caractéristique est enregistrée qui associe une consigne (18) ou respectivement une valeur de la contrainte (20) à chaque valeur du produit de la vitesse de rotation du rotor ou générateur et du courant massique d'air ($\dot{m}$).

15. Éolienne selon l'une quelconque des revendications 9 à 12, **caractérisée en ce que** la commande de fonctionnement (14) comporte un dispositif dans lequel une courbe caractéristique est enregistrée qui associe une consigne (18) ou respectivement une valeur de la contrainte (20) à chaque valeur du produit du carré de la vitesse du vent (v) et du courant massique d'air ($\dot{m}$).

## Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19844258 A1